(19) Europäisches Patentamt
European Patent Office
Office européen des brevets

(11) EP 3 022 253 B2

(12) # NEUE EUROPÄISCHE PATENTSCHRIFT
Nach dem Einspruchsverfahren

(45) Veröffentlichungstag und Bekanntmachung des Hinweises auf die Entscheidung über den Einspruch:
**14.08.2024 Patentblatt 2024/33**

(45) Hinweis auf die Patenterteilung:
**19.05.2021 Patentblatt 2021/20**

(21) Anmeldenummer: **14739187.4**

(22) Anmeldetag: **16.07.2014**

(51) Internationale Patentklassifikation (IPC):
***C08J 3/12*** *(2006.01)* ***C08J 3/14*** *(2006.01)*
***C08G 65/46*** *(2006.01)* ***C08G 75/23*** *(2006.01)*

(52) Gemeinsame Patentklassifikation (CPC):
**C08J 3/14; C08G 65/46;** C08J 2371/10; C08J 2381/06

(86) Internationale Anmeldenummer:
**PCT/EP2014/065242**

(87) Internationale Veröffentlichungsnummer:
**WO 2015/007776 (22.01.2015 Gazette 2015/03)**

(54) **VEREINZELUNG EINER POLYARYLENETHERLÖSUNG**

SEPARATION OF A POLYARYLENE ETHER SOLUTION

SÉPARATION D'UNE SOLUTION D'ÉTHER DE POLYARYLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2013 EP 13176991**

(43) Veröffentlichungstag der Anmeldung:
**25.05.2016 Patentblatt 2016/21**

(73) Patentinhaber: **BASF SE**
**67056 Ludwigshafen am Rhein (DE)**

(72) Erfinder:
- **ERBES, Jörg**
  **76137 Karlsruhe (DE)**
- **LANGE, Gerhard**
  **69198 Schriesheim (DE)**
- **KORTEKAMP, Tobias**
  **68159 Mannheim (DE)**
- **SCHNEIDER, Cecile**
  **67227 Frankenthal (DE)**

(74) Vertreter: **Baier, Martin**
**Ellwanger & Baier**
**Patentanwälte Partnerschaftsgesellschaft**
**Friedrichsplatz 9**
**68165 Mannheim (DE)**

(56) Entgegenhaltungen:
**EP-A1- 2 189 487** **EP-A1- 2 287 236**
**EP-A1- 2 305 740** **EP-A1- 2 305 740**
**EP-A1- 3 013 889** **WO-A1-94/15999**
**DE-A1- 19 816 955** **DE-A1- 3 644 464**
**GB-A- 1 153 035** **GB-A- 1 394 983**
**US-A- 3 923 738** **US-A- 4 108 837**
**US-A- 5 013 816** **US-A- 5 015 423**
**US-A1- 2011 224 386**

- **KRICHELDORF ET AL: "Aromatic Polyethers", 1 January 2005, HANDBOOK OF POLYMER SYNTHESIS, MARCEL DEKKER, US, PAGE(S) 427 - 443, ISBN: 978-0-8247-5473-0, XP009154507**
- **ANONIMOUS ED - MARK ET AL: "Polymer science and technology", 1 January 2003, ENCYCLOPEDIA OF POLYMER SCIENCE AND TECHNOLOGY,, PAGE(S) 2 - 8, ISBN: 0-471-27507-7, XP009154506**



Processed by Luminess, 75001 PARIS (FR)

**Beschreibung**

Die Erfindung betrifft ein Verfahren zur Herstellung von Polyarylenether-Perlen aus einer Polyarylenetherlösung umfassend die Schritte

i) Vereinzelung der Polyarylenetherlösung zu Tropfen,
ii) Überführen der Tropfen in ein Fällbad unter Ausbildung von Polyarylenether-Perlen in dem Fällbad, wobei das Fällbad

(A) mindestens ein aprotisches Lösungsmittel (Komponente (1)) und mindestens ein protisches Lösungsmittel (Komponente (2)) enthält,
(B) eine Temperatur von 0°C bis $T_c$ aufweist, wobei die kritische Temperatur $T_c$ in [°C] sich mit der Zahlenwertgleichung $T_c = (99 - c) / 0,61$ bestimmen lässt, in der c die Konzentration der Komponente (1) im Fällbad in [Gew.-%] ist und
(C) die Komponente (1) in Konzentrationen von 12 Gew.-% bis 70 [Gew.-%] aufweist, wobei

die Gew.-% jeweils bezogen sind auf die Summe der Gew.-% der Komponente (1) und der Komponente (2) im Fällbad, und wobei das Fällbad als Komponente (2) Wasser und/oder Alkohol enthält, wobei die Polyarylenetherlösung eine Konzentration von 5 bis 50 Gew.-% Polyarylenether im aprotischen Lösungsmittel aufweist, wobei die Gew.-% bezogen sind auf die Summe der Gew.-% des Polyarylenethers und des aprotischen Lösungsmittels, wobei die Polyarylenetherlösung bei der Vereinzelung eine Temperatur von 15 bis 250°C aufweist, wobei das aprotische Lösungsmittel ausgewählt ist aus der Gruppe bestehend aus Dimethylsulfoxid, Dimethylformamid, Sulfolan, Diphenylsulfon, 1,2-Dichlorbenzol, Hexamethylphosphorsäuretriamid und deren Mischungen.

Auch betrifft die vorliegende Erfindung die Polyarylenether-Perlen aus dem Verfahren und deren Verwendung zur Herstellung von Polyarylenetherprodukten, wobei als Vereinzelungsvorrichtung eine Kapillare und/oder Lochplatte verwendet wird und wobei die Kapillare und/oder Lochplatte einen Durchmesser von 0,1 bis 5,0 mm aufweist.

Bei der Herstellung von Polymeren fallen die Polymere häufig in Form von Polymerlösungen an. Diese Polymerlösungen können dabei direkt bei der Herstellung der Polymeren entstehen, beispielsweise bei der Polykondensation von Monomeren in einem Lösungsmittel (Lösungspolymerisation). Auch bei der Polykondensation von Monomeren in Abwesenheit eines Lösungsmittels (Massepolymerisation) werden die erhaltenen Polymere häufig zur weiteren Aufarbeitung in einem Lösungsmittel gelöst. Zur Überführung der in der Polymerlösung enthaltenen Polymere in den reinen, festen Zustand sind im Stand der Technik verschiedene Verfahren beschrieben worden. Ein gängiges Verfahren ist hierbei das Einbringen der Polymerlösung in ein weiteres Lösungsmittel, in dem das Polymer nicht löslich ist. Das weitere Lösungsmittel, in dem das Polymer nicht löslich ist, wird im Allgemeinen auch als Fällbad bezeichnet.

Zur Herstellung von Polymer-Perlen sind im Stand der Technik darüber hinaus Verfahren beschrieben, bei denen die Polymerlösung zu Tropfen vereinzelt wird aus denen im Fällbad nachfolgend die Polymer-Perlen erhalten werden. Bei den im Stand der Technik beschriebenen Verfahren muss dabei das Fällbad hauptsächlich aus dem weiteren Lösungsmittel, in dem das Polymer nicht löslich ist, bestehen. Der Anteil des Lösungsmittels, in dem das Polymer löslich ist, im Fällbad wird dabei möglichst niedrig gehalten. Dies ist notwendig, um die Ausfällung sicher zu gewährleisten. Um den Anteil des Lösungsmittels, in dem das Polymer löslich ist, im Fällbad möglichst niedrig zu halten, werden im Allgemeinen entweder geringe Volumina der Polymerlösung in große Volumina des Fällbad eingetropft oder das Fällbad wird kontinuierlich ausgetauscht und durch frisches ersetzt.

Verfahren zur Herstellung von Polymer-Perlen sind beispielsweise in der DE 3644 464 und der EP 2 305740 beschrieben. Die DE 3 644 464 beschreibt ein Verfahren zur Herstellung von Polyarylethersulfon-Perlen einer Partikelgröße von 100 μm bis 10 mm, bei dem eine Lösung, die ein Polyarylethersulfon und N-Methylpyrrolidon enthält, in ein Fällbad eingetropft wird, das aus Wasser besteht. Das Fällbad weist eine Temperatur zwischen Raumtemperatur und dicht unter dem Siedepunkt des Fällmittels auf. Auch die EP 2 305740 beschreibt ein Verfahren zur Herstellung von Polymer-Perlen, bei dem reines Wasser als Fällbad eingesetzt wird. EP 2305740 beschreibt eine bevorzugte Fällbadtemperatur von mindestens 80°C. Das als Fällbad eingesetzte Wasser wird dabei ständig ausgetauscht, um die Konzentration an N-Methylpyrrolidon möglichst niedrig zu halten und die gebildeten Polymer-Perlen zu nachgelagerten Prozessstufen weiter zu transportieren.

Bei den im Stand der Technik beschriebenen Verfahren zur Herstellung von Polymer-Perlen bestand noch Raum für Verbesserungen. Die nach den im Stand der Technik erhältlichen Polymer-Perlen neigen zur Agglomeration. Darüber hinaus sind die Sphärizitäts-Werte nicht immer zufriedenstellend. Bei den im Stand der Technik beschriebenen Verfahren entsteht zudem in größeren Mengen sogenannter Feinanteil. Hierbei handelt es sich um Polymer-Perlen, deren Teilchengröße sehr gering ist und die bei der weiteren Aufarbeitung bzw. Verarbeitung der Polymer-Perlen zu Problemen führen.

Die Aufgabe der vorliegenden Erfindung bestand darin, ein Verfahren zu entwickeln, bei dem Polyarylenether-Perlen zur Verfügung gestellt werden, die im Fällbad nicht agglomerieren und somit ohne weitere Aufarbeitungsschritte weiterverarbeitet werden können. Damit Polyarylenether-Perlen gut weiterverarbeitbar sind, sollten sie möglichst rund sein, also einen Sphärizitäts-Wert größer 0,5 aufweisen. Insbesondere sollten die so erlangten Perlen eine Form aufweisen, in der mögliche Verunreinigungen der Polyarylenether-Perlen leicht extrahiert werden können. Darüber hinaus sollte das Verfahren zuverlässig laufen. Die Polyarlyenether-Perlen sollten darüber hinaus geringere Mengen an Feinanteil aufweisen, als Polyarylenether-Perlen, die nach den Verfahren aus dem Stand der Technik zugänglich sind. Die Polyarylenether-Perlen sollten sich gut auf- und weiterverarbeiten lassen.

Die erfindungsgemäße Aufgabe wird durch das eingangs beschriebene Verfahren gelöst.

Es wurde überraschend festgestellt, dass es zur Herstellung von Polyarylenether-Perlen vorteilhaft ist, Fällbäder einzusetzen, die größere Mengen mindestens eines aprotischen Lösungsmittels enthalten. Entgegen dem im Stand der Technik beschriebenen Vorurteil, dass das eingesetzte Fällbad möglichst wenig Lösungsmittel enthalten soll, in dem das Polymer gut löslich ist, wurde gefunden, dass durch Konzentrationen von mindestens 5 Gew.-%, bevorzugt mindestens 8 Gew.-%, besonders bevorzugt mindestens 12 Gew.-%, mindestens eines aprotischen Lösungsmittels (Komponente (1)) im Fällbad die Bildung des unerwünschten Feinanteils verhindert oder zumindest vermindert werden kann.

Es wird vermutet, dass die Anwesenheit eines aprotischen Lösungsmittels die Oberflächenspannung des Fällbads herabsetzt, wodurch die Bildung von Feinanteil verringert wird.

Unter "Feinanteil" werden im Rahmen der vorliegenden Erfindung Polyarylenether-Perlen verstanden, die eine Partikelgröße von $\leq 1000\ \mu m$ (kleiner/gleich $1000\ \mu m$) aufweisen. Die Bestimmung der Partikelgröße erfolgt dabei mittels Siebanalyse. Vermessen werden die bei 60 °C getrockneten Polyarylenether-Perlen.

Bei dem erfindungsgemäßen Verfahrens beträgt die Konzentration der Komponente (1) im Fällbad bereits zu Beginn des Verfahrens mindestens 12 Gew.-%.

Die Untergrenze der Konzentration der Komponente (1) im Fällbad beträgt somit mindestens 12 Gew.-%. Die Gew.-% sind dabei jeweils bezogen auf die Summe der Gew.-% der Komponente (1) und der Komponente (2) im Fällbad.

Die Obergrenze der Konzentration der Komponente (1) im Fällbad ist temperaturabhängig. Sie wird auch als kritische Konzentration $C_c$ bezeichnet. Die Einheit von $C_c$ ist [Gew.-%].

Die kritische Konzentration $C_c$ in [Gew.-%] lässt sich durch die Zahlenwertgleichung

$$c_c = 99 - 0{,}61 * T$$

bestimmen.

Darin ist T die Temperatur des Fällbads in [°C]. T gibt damit die tatsächliche Temperatur des Fällbads an. Ausgehend von der tatsächlichen Temperatur des Fällbads lässt sich die kritische Konzentration $C_c$ in Gew.-% errechnen. Die Gew.-% sind dabei auf die Summe der Komponenten (1) und (2) im Fällbad bezogen.

Innerhalb des erfindungsgemäßen Konzentrationsbereichs von 5 Gew.-% bis $C_c$ wird die Bildung von Feinanteil sowie die Agglomeration der Polyarylenether-Perlen weitestgehend verhindert.

Polyarylenether sind dem Fachmann als Polymerklasse bekannt. Im Prinzip kommen alle dem Fachmann bekannten und/oder nach bekannten Methoden herstellbaren Polyarylenether in Betracht. Entsprechende Methoden werden weiter unten erläutert.

Bevorzugte Polyarylenether sind aus Bausteinen der allgemeinen Formel I aufgebaut:

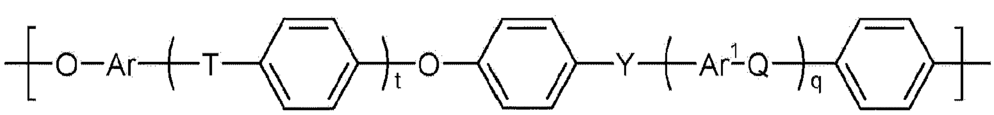

(I),

wobei die Symbole t, q, Q, T, Y, Ar und $Ar^1$ folgende Bedeutungen aufweisen:

t, q: unabhängig voneinander 0, 1, 2 oder 3,

Q, T, Y: unabhängig voneinander jeweils eine chemische Bindung oder Gruppe, ausgewählt aus -O-, -S-, $-SO_2-$, S=O, C=O, -N=N- und $-CR^aR^b-$, wobei $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe stehen, und wobei wenigstens eines aus Q, T und Y für $-SO_2-$ steht und

Ar, $Ar^1$: unabhängig voneinander eine Arylengruppe mit von 6 bis 18 Kohlenstoffatomen.

Falls Q, T oder Y unter den oben genannten Voraussetzungen eine chemischen Bindung ist, dann ist darunter zu verstehen, dass die links benachbarte und die rechts benachbarte Gruppe direkt miteinander über eine chemische Bindung verknüpft vorliegen.

Vorzugsweise werden Q, T und Y in Formel I allerdings unabhängig voneinander ausgewählt aus -O- und $-SO_2-$, mit der Maßgabe, dass wenigstens eines aus der Gruppe bestehend aus Q, T und Y für $-SO_2-$ steht.

Sofern Q, T oder Y $-CR^aR^b-$ sind, stehen $R^a$ und $R^b$ unabhängig voneinander jeweils für ein Wasserstoffatom oder eine $C_1$-$C_{12}$-Alkyl-, $C_1$-$C_{12}$-Alkoxy- oder $C_6$-$C_{18}$-Arylgruppe.

Bevorzugte $C_1$-$C_{12}$-Alkylgruppen umfassen lineare und verzweigte, gesättigte Alkylgruppen mit von 1 bis 12 Kohlenstoffatomen. Insbesondere sind folgende Reste zu nennen: $C_1$-$C_6$-Alkylrest, wie Methyl, Ethyl, n-Propyl, i-Propyl, n-Butyl, sek-Butyl, 2- oder 3-Methyl-pentyl und längerkettige Reste wie unverzweigtes Heptyl, Octyl, Nonyl, Decyl, Undecyl, Lauryl und die ein- oder mehrfach verzweigten Analoga davon.

Als Alkylreste in den vorgenannten einsetzbaren $C_1$-$C_{12}$-Alkoxygruppen kommen die weiter oben definierten Alkylgruppen mit von 1 bis 12 Kohlenstoffatomen in Betracht. Vorzugsweise verwendbare Cycloalkylreste umfassen insbesondere $C_3$-$C_{12}$-Cycloalkylreste, wie zum Beispiel Cyclopropyl, Cyclobutyl, Cyclopentyl, Cyclohexyl, Cycloheptyl, Cyclooctyl, Cyclopropylmethyl, Cyclopropylethyl, Cyclopropylpropyl, Cyclobutylmethyl, Cyclobutylethyl, Cyclpentylethyl, -propyl, -butyl, -pentyl, -hexyl, Cyclohexylmethyl, -dimethyl, und -trimethyl.

Ar und $Ar^1$ bedeuten unabhängig voneinander eine $C_6$-$C_{18}$-Arylengruppe. Ausgehend von den weiter unten beschriebenen Ausgangsprodukten ist Ar vorzugsweise abgeleitet von einer elektronenreichen, leicht elektrophil angreifbaren aromatischen Substanz, die bevorzugt aus der Gruppe bestehend aus Hydrochinon, Resorcin, Dihydroxynaphthalin, insbesondere 2,7-Dihydroxynaphthalin, und 4,4'-Bisphenol ausgewählt wird. Vorzugsweise ist $Ar^1$ eine unsubstituierte $C_6$- oder $C_{12}$-Arylengruppe.

Als $C_6$-$C_{18}$-Arylengruppen Ar und $Ar^1$ kommen insbesondere Phenylengruppen, wie 1,2-, 1,3- und 1,4-Phenylen, Naphthylengruppen, wie beispielsweise 1,6-, 1,7-, 2,6- und 2,7-Naphthylen, sowie die von Anthracen, Phenanthren und Naphthacen abgeleiteten Arylengruppen in Betracht.

Vorzugsweise werden Ar und $Ar^1$ in der bevorzugten Ausführungsform gemäß Formel I unabhängig voneinander ausgewählt aus der Gruppe bestehend aus 1,4-Phenylen, 1,3-Phenylen, Naphthylen, insbesondere 2,7-Dihydroxynaphthylen, und 4,4'-Bisphenylen.

Bevorzugte Polyarylenether sind solche, die mindestens eine der folgenden Bausteine Ia bis Io als wiederkehrende Struktureinheiten enthalten:

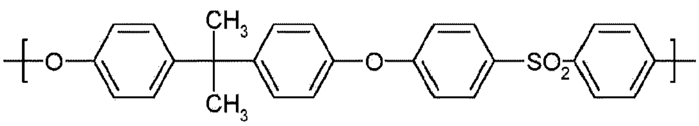
Ia

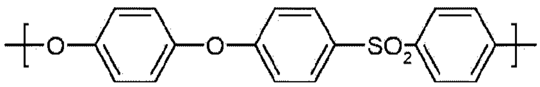
Ib

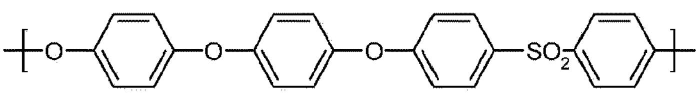
Ic

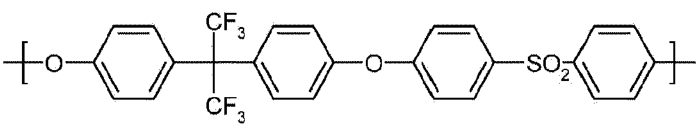
Id

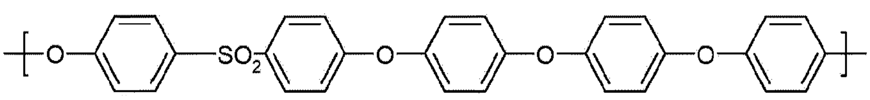
Ie

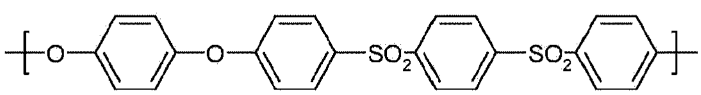
If

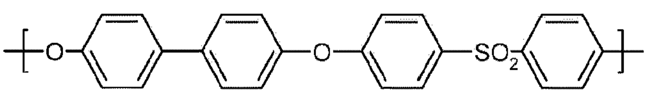
Ig

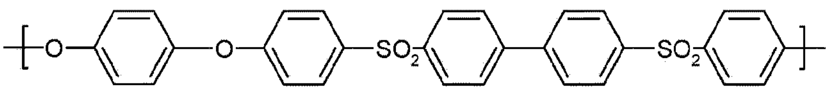

Ih

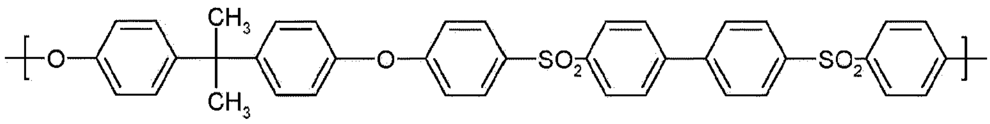

Ii

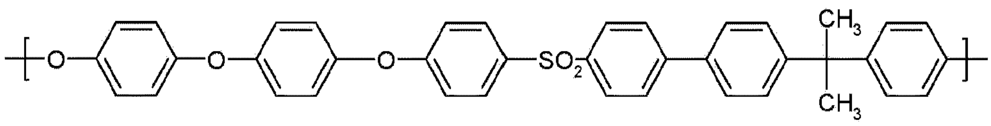

Ij

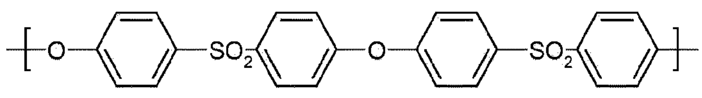

Ik

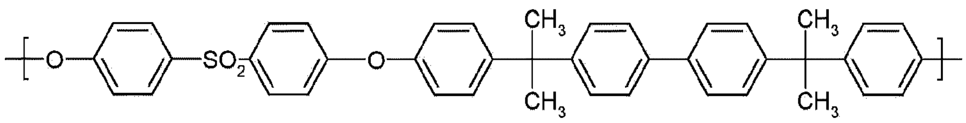

Il

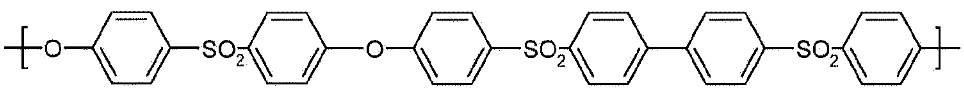

Im

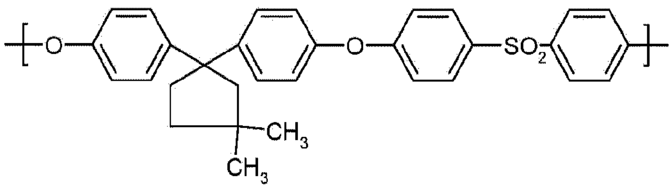

In

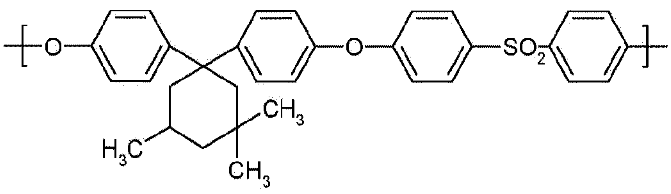

Io

Zusätzlich zu den bevorzugten Bausteinen Ia bis Io sind auch solche Bausteine bevorzugt, in denen eine oder mehrere 1,4-Phenyleneinheiten, die von Hydrochinon abstammen, durch 1,3-Phenyleneinheiten, die von Resorcin abstammen- oder durch Naphthyleneinheiten, die von Dihydroxynaphthalin abstammen, ersetzt sind.

Als Bausteine der allgemeinen Formel I besonders bevorzugt sind die Bausteine Ia, Ig und Ik. Es ist außerdem besonders bevorzugt, wenn die Polyarylenether der Komponente (A) im Wesentlichen aus einer Sorte Bausteine der allgemeinen Formel I, insbesondere aus einem Baustein ausgewählt aus Ia, Ig und Ik aufgebaut sind.

In einer besonders bevorzugten Ausführungsform ist Ar = 1,4-Phenylen, t = 1, q = 0, T ist eine chemische Bindung und Y = $SO_2$. Aus der vorgenannten Wiederholungseinheit aufgebaute besonders bevorzugte Polyarylenethersulfone (A) werden als Polyphenylensulfon (PPSU) bezeichnet (Formel Ig).

In einer weiteren besonders bevorzugten Ausführungsform ist Ar = 1,4-Phenylen, t = 1, q = 0, T = $C(CH_3)_2$ und Y = $SO_2$. Aus der vorgenannten Wiederholungseinheit aufgebaute besonders bevorzugte Polyarylenethersulfone (A) werden als Polysulfon (PSU) bezeichnet (Formel Ia).

In einer weiteren besonders bevorzugten Ausführungsform ist Ar = 1,4-Phenylen, t = 1, q = 0, T = Y = $SO_2$. Aus der vorgenannten Wiederholungseinheit aufgebaute besonders bevorzugte Polyarylenethersulfone werden als Polyethersulfon (PESU) bezeichnet (Formel Ik).

Abkürzungen wie PPSU, PESU und PSU entsprechen im Rahmen der vorliegenden Erfindung der DIN EN ISO 1043-1 (Kunststoffe - Kennbuchstaben und Kurzzeichen - Teil 1: Basis-Polymere und ihre besonderen Eigenschaften (ISO 1043-1:2001); Deutsche Fassung EN ISO 1043-1:2002).

Die Polyarylenether weisen vorzugsweise gewichtsmittlere Molekulargewichte $M_w$ von 10.000 bis 150.000 g/mol, insbesondere von 15.000 bis 120.000 g/mol, besonders bevorzugt von 18.000 bis 100.000 g/mol auf, bestimmt mittels Gelpermeationschromatographie im Lösungsmittel Dimethylacetamid gegen engverteiltes Polymethylmethacrylat als Standard.

Darüber hinaus weisen die Polyarylenether vorzugsweise eine scheinbare Schmelzviskosität bei 350 °C/1150 $s^{-1}$ von 150 bis 300 Pa s, bevorzugt von 150 bis 275 Pa s auf.

Die Fließfähigkeit wurde anhand der Schmelzeviskosität beurteilt. Die Schmelzeviskosität wurde mittels eines Kapillarrheometers bestimmt. Dabei wurde die scheinbare Viskosität bei 350°C als Funktion der Scherrate in einem Kapillarviskosimeter (Göttfert Kapillarviskosimeter Rheograph 2003) mit einer Kreiskapillare der Länge 30 mm, einem Radius von 0,5 mm, einem Einlaufwinkel der Düse von 180°, einem Durchmesser des Reservoirgefäßes der Schmelze von 12 mm und mit einer Vorheizzeit von 5 Minuten bestimmt. Angegeben sind die bei 1150 $s^{-1}$ bestimmten Werte.

Herstellungsverfahren, die zu den vorgenannten Polyarylenethern führen, sind dem Fachmann an sich bekannt und beispielsweise in Herman F. Mark, "Encyclopedia of Polymer Science and Technology", third edition, Volume 4, 2003, Kapitel "Polysulfones" auf den Seiten 2 bis 8 sowie in Hans R. Kricheldorf, "Aromatic Polyethers" in: Handbook of Polymer Synthesis, second edition, 2005 auf den Seiten 427 bis 443 beschrieben.

Besonders bevorzugt ist die Umsetzung mindestens einer aromatischen Verbindung mit zwei Halogensubstituenten und mindestens einer aromatischen Verbindung mit zwei funktionellen Gruppen, die gegenüber vorgenannten Halogensubstituenten reaktiv sind, in aprotischen polaren Lösungsmitteln in Gegenwart von wasserfreiem Alkalicarbonat, insbesondere Natrium-, Kalium-, Calciumcarbonat oder Mischungen davon, wobei Kaliumcarbonat ganz besonders bevorzugt ist. Eine besonders geeignete Kombination ist N-Methylpyrrolidon als Lösungsmittel und Kaliumcarbonat als Base. Vorzugsweise weisen die Polyarylenether entweder Halogenendgruppen, insbesondere Chlorendgruppen, oder veretherte Endgruppen, insbesondere Alkyletherendgruppen, auf, welche durch Umsetzung der OH- bzw. Phenolat-Endgruppen mit geeigneten Veretherungsmitteln erhältlich sind.

Geeignete Veretherungsmittel sind beispielsweise monofunktionelles Alkyl- oder Arylhalogenid, beispielsweise $C_1$-$C_6$-Alkylchlorid, -bromid oder -iodid, bevorzugt Methylchlorid, oder Benzylchlorid, -bromid oder -iodid oder Mischungen davon. Bevorzugte Endgruppen im Rahmen der Polyarylenether der Komponente sind Halogen, insbesondere Chlor, Alkoxy, insbesondere Methoxy, Aryloxy, insbesondere Phenoxy, oder Benzyloxy.

Unter einer Polyarylenetherlösung wird eine Lösung verstanden, die ein oder mehrere Lösungsmittel, einen oder mehrere Polyarylenether umfassen kann. Die Polyarylenetherlösung kann darüber hinaus Materialien enthalten, die aus dem Herstellungsprozess stammen. Hierzu zählen Verunreinigungen als auch Einsatzstoffe. Insbesondere kann die Polyarylenetherlösung auch Monomere sowie Salze aus dem Herstellungsprozess der Polyarylenether wie Natriumcarbonat, Kaliumcarbonat, Kaliumchlorid oder Natriumchlorid umfassen. Auch Nebenprodukte und/oder Zersetzungsprodukte können in der Polyarylenetherlösung vorhanden sein.

Als Lösungsmittel für die Polyarlyenetherlösung können ein oder mehrere aprotische Lösungsmittel verwendet werden. Unter einem aprotischen Lösungsmittel ist ein Lösungsmittel zu verstehen, das nicht über eine funktionelle Gruppe verfügt, aus der ein oder mehrere Wasserstoffatome im Lösungsmittelmolekül als Proton abgespalten werden kann. Das aprotische Lösungsmittel ist ausgewählt aus der Gruppe Dimethylsulfoxid, Dimethylformamid, Sulfolan, Diphenylsulfon, 1,2-Dichlorbenzol, Hexamethylphosphorsäuretriamid oder deren Mischungen verwendet werden. Als aprotische Lösungsmittel sind Sulfolan und/oder Dimethylsulfoxid bevorzugt.

In einer Ausführungsform der vorliegenden Erfindung enthält die Polyarylenetherlösung das gleiche aprotische Lösungsmittel wie das Fällbad. Gegenstand der vorliegenden Erfindung ist somit auch ein Verfahren, bei dem die Polyarylenetherlösung und das Fällbad das gleiche aprotische Lösungsmittel enthalten. In einer bevorzugten Ausführungsform enthalten sowohl die Polyarylenetherlösung als auch das Fällbad Sulfolan und/oder Dimethylsulfoxid.

Die Polyarylenetherlösung hat eine Konzentration von 5 bis 50 Gew.-% Polyarylenether in aprotischem Lösungsmittel, wobei die Gew.-% bezogen sind auf die Summe der Gew.-% des Polyarylenethers und des aprotischen Lösungsmittels. Insbesondere kann die Polyarylenetherlösung eine Konzentration von 5 bis 40 Gew.-%, bevorzugt von 5 bis 35 Gew.-%, besonders bevorzugt von 5 bis 34 Gew.-%, zum Beispiel von 6 bis 30 Gew.-% Polyarylenether in aprotischem Lösungsmittel aufweisen, wobei die Gew.-% bezogen sind auf die Summe der Gew.-% des Polyarylenethers und des aprotischen Lösungsmittels.

Die Polyarylenetherlösung kann eine Viskosität von 0,05 bis 1,30 Pa s aufweisen, wobei die Viskosität in einem schubspannungskontrollierten Rotationsviskosimeter zum Beispiel mit einer Couette Geometrie (DIN 53019-1), bei der Temperatur, bei der die Vereinzelung durchgeführt wird, und bei einem Scherrate von $10^{-1}$ $s^{-1}$ gemessen wird.

Die Polyarylenetherlösung kann bei dem Vereinzelungsschritt eine Temperatur von 15 bis 250 °C insbesondere von 20 bis 120 °C aufweisen, zum Beispiel von 20 bis 110 °C aufweisen, wobei die Temperatur mit Hilfe eines Thermometers, zum Beispiel mit einem Widerstandsthermometer PT100 an der Vereinzelungsvorrichtung gemessen werden

kann, aus dem die Polyarylenetherlösung der Vereinzelungsgvorrichtung zur Durchführung der Vereinzelung zugeführt wird.

Bei dem Verfahren zur Herstellung von Polyarylenether-Perlen aus einer Polyarylenetherlösung durchläuft eine Polyarylenetherlösung einen Vereinzelungsschritt zur Bildung von Tropfen. Dabei ist es möglich, unterschiedliche Arten von Vereinzelungsvorrichtungen einzusetzen. Die Polymerlösung kann beispielsweise versprüht oder vertropft werden.

Wird die Polymerlösung versprüht, können als Vereinzelungsvorrichtung Einstoff-, Zweistoff- oder Mehrstoffdüsen verwendet werden. Zweistoff- oder Mehrstoffdüsen können insbesondere dann angewendet werden, wenn die Polyarylenetherlösung schon vor dem Auftreffen auf die Fälllösung im Fällbad mit der Fälllösung in Kontakt gebracht werden soll.

Insbesondere können Sprühdüsen gewählt werden, die möglichst große Perlen erzielen. Zur Erzielung größerer Perlen können Federkegeldüsen verwendet werden, also Druckdüsen, die durch eine Feder betätigt werden. Zur Erzielung möglichst kleiner Perlen können Hohlkegeldüsen verwendet werden.

Wird die Polyarylenetherlösung vereinzelt, bietet es sich an als Vereinzelungsvorrichtungen, eine oder mehrere Lochplatten zu verwenden. Unter einer Lochplatte wird eine Platte aus Metall, Glas oder Kunststoff verstanden, die Löcher aufweist, durch die die Polyarylenetherlösung vereinzelt wird.

Der Durchmesser eines Loches der Lochplatte kann von 0,1 bis 5,0 mm betragen. Insbesondere kann der Durchmesser der Lochplatte von 0,5 bis 4,0 mm betragen. Bevorzugt beträgt der Durchmesser der Lochplatte 0,5 bis 2,5 mm, insbesondere von 0,5 bis 2,0 mm.

Auch können als Vereinzelungsvorrichtung eine oder mehrere Kapillaren zur Vertropfung der Polyarylenetherlösung eingesetzt werden. Unter einer Kapillare wird ein langgestreckter Hohlraum verstanden, der von einer Begrenzung umgeben ist, die aus Metall, Glas und/oder Kunststoff sein kann.

Der Innendurchmesser einer Kapillare kann von 0,1 bis 5,0 mm betragen. Insbesondere kann der Innendurchmesser der Kapillare von 0,5 bis 4,0 mm betragen. Bevorzugt kann der Durchmesser der Kapillare 0,5 bis 2,5 mm, insbesondere von 0,5 bis 2,0 mm betragen.

In einer Ausführungsform bezüglich des Vereinzelungsverfahrens wird die Polyarylenetherlösung bei Überdruck vereinzelt. In einer Variante wird die Polyarylenetherlösung bei einem Überdruck von 0,1 bis 50 bar, insbesondere von 1 bis 40 bar, bevorzugt von 1 bis 10 bar, besonders bevorzugt von 1 bis 9 bar vereinzelt. Der Druck wird zwischen der Vereinzelungsvorrichtung und dem Vorratsbehälter, der die zu vereinzelnde Polyarylenetherlösung umfasst, mit Hilfe eines Überdruckmessgeräts (zum Beispiel kann ein Rohrfeder-Überdruckmessgerät geeignet sein) gemessen.

Das Fällbad enthält ein oder mehrere aprotische Lösungsmittel als Komponente (1). Unter einem aprotischen Lösungsmittel ist ein Lösungsmittel zu verstehen, das nicht über eine funktionelle Gruppe verfügt, aus der ein oder mehrere Wasserstoffatome im Lösungsmittelmolekül als Proton abgespalten werden kann. Als aprotisches Lösungsmittel können Dimethylsulfoxid, Dimethylformamid, Sulfolan, Diphenylsulfon, 1,2-Dichlorbenzol, Hexamethylphosphorsäuretriamid oder deren Mischungen verwendet werden.

Das Fällbad enthält außerdem ein oder mehrere protische Lösungsmittel als Komponente (2).

Das Fällbad enthält Wasser und/oder mindestens einen Alkohol als Komponente (2) umfassen. Als Wasser kann mineralisiertes oder demineralisiertes Wasser verwendet werden. Als Alkohol können ein- und/oder zweiwertige Alkohole verwendet werden. Bevorzugt werden einwertige Alkohole verwendet. Als einwertige Alkohole können insbesondere Methanol, Ethanol, 1-Propanol und/oder 2-Propanol verwendet werden.

Bevorzugt umfasst das Fällbad ein Gemisch aus einem aprotischen Lösungsmittel als Komponente (1) und Wasser und/oder einem Alkohol als Komponente (2).

Das Fällbad enthält 12 bis 70 Gew.-% der Komponente (1), wobei die Gew.-% jeweils bezogen sind auf die Summe der Gew.-% der Komponente (1) und der Komponente (2) im Fällbad.

Als Untergrenze weist das Fällbad im Allgemeinen eine Temperatur von mindestens 0°C, bevorzugt von mindestens 5 °C auf. Die Obergrenze der Temperatur des Fällbads ist abhängig von der Konzentration c der Komponente (1) im Fällbad. Die Obergrenze der Temperatur wird auch als kritische Temperatur $T_c$ bezeichnet. Die Einheit von $T_c$ ist [°C].

Die kritische Temperatur $T_c$ in [°C] lässt sich durch die Zahlenwertgleichung

$$T_c = (99 - c) / 0{,}61$$

bestimmen.

Darin ist c die Konzentration der Komponente (1) im Fällbad in [Gew.-%]. c gibt damit die tatsächliche Konzentration der Komponente (1) im Fällbad an. Ausgehend von der tatsächlichen Konzentration der Komponente (1) im Fällbad lässt sich die kritische Temperatur $T_c$ in [°C] errechnen Die Gew.-% sind dabei auf die Summe der Komponenten (1) und (2) im Fällbad bezogen.

Innerhalb des erfindungsgemäßen Temperaturbereichs von 0 °C bis $T_c$, bevorzugt von 5°C bis $T_c$, wird die

Bildung von Feinanteil sowie die Agglomeration der Polyarylenether-Perlen weitestgehend verhindert.

In einer Ausführungsform der Erfindung ist das Fällbad bewegt. Insbesondere kann das Fällbad gerührt werden. Auch kann der Vereinzelungsschritt in ein strömendes Fällbad durchgeführt werden.

In einer Ausführungsform findet der Vereinzelungsschritt in einem geschlossenen Fällbad statt, wobei die Applikation zur Vereinzelung oberhalb der Fälllösung in oder an dem geschlossenen Behälter angebracht ist.

In einem Verfahren zur Herstellung von Polyarylenether-Perlen kann die Polyarylenetherlösung eine Fallstrecke von der Austrittsstelle bis Fällbadoberfläche von 0,10 m bis 1,20 m zurücklegen. Zum Beispiel kann die Polyarylenetherlösung eine Fallstrecke von der Austrittsstelle bis Fällbadoberfläche von 0,15 m bis 1,00 m zurücklegen.

Gegenstand der vorliegenden Erfindung ist des Weiteren ein Verfahren zur Herstellung von Polyarylenether-Perlen aus einer Polyarylenetherlösung, die ein aprotisches Lösungsmittel enthält und eine Konzentration von 5 bis 50 Gew.-% Polyarylenether im aprotischen Lösungsmittel aufweist, wobei die Gew.-% bezogen sind auf die Summe der Gew.-% des Polyarylenethers und des aprotischen Lösungsmittels, umfassend die Schritte

i) Vereinzelung der Polyarylenetherlösung zu Tropfen, wobei die Polyarylenetherlösung eine Temperatur von 15 bis 250°C aufweist,
ii) Überführen der Tropfen in ein Fällbad unter Ausbildung von Polyarylenether-Perlen in dem Fällbad, wobei das Fällbad

(A) mindestens ein aprotisches Lösungsmittel (Komponente (1)) und mindestens ein protisches Lösungsmittel (Komponente (2)) enthält,
(B) eine Temperatur von 0°C bis $T_c$ aufweist, wobei die kritische Temperatur $T_c$ in [°C] sich mit der Zahlenwertgleichung $T_c = (99 - c) / 0{,}61$ bestimmen lässt, in der c die Konzentration der Komponente (1) im Fällbad in [Gew.-%] ist und
(C) die Komponente (1) in Konzentrationen von 5 bis 70 Gew.-% aufweist, wobei

die Gew.-% jeweils bezogen sind auf die Summe der Gew.-% der Komponente (1) und der Komponente (2) im Fällbad, und wobei das Fällbad als Komponente (2) Wasser und/oder Alkohol enthält und das aprotische Lösungsmittel ausgewählt ist aus der Gruppe bestehend aus Dimethylsulfoxid, Dimethylformamid, Solfolan, Diphenylsulfon, 1,2-Dichlorbenzol, Hexamethylphosphorsäuretriamid und deren Mischungen.

Des Weiteren bezieht sich die Erfindung auf Polyarylenether-Perlen aus dem Verfahren zur Herstellung von Polyarylenether-Perlen, wobei als Vereinzelungsvorrichtung eine Kapillare und/oder Lochplatte verwendet wird und wobei die Kapillare und/oder Lochplatte einen Durchmesser von 0,1 bis 5,0 mm aufweist. Die Perlen liegen nach dem Vereinzelungsschritt in der Fällbad Lösung vor. Die Perlen können von den weiteren Bestandteilen, die im Fällbad vorhanden sind, durch geeignete Mittel abgetrennt werden. Beispielsweise können die Perlen durch Sieben abgetrennt werden.

In der Regel haben die Perlen eine Verweilzeit in der Fälllösung von 1 min bis 2 Tage.

Untersuchung der Perlen mit Hilfe eines Camsizers zur Bildanalyse ergibt, dass die Perlen einen Sphärizität-Wert (SPHT-Wert) von 0,4 bis 1,0, insbesondere von 0,5 bis 1,0 aufweisen können. Zur Ermittlung des SPHT-Wertes kann nach Extraktion der Perlen mit heißem Wasser (95 °C) für 20 Stunden und anschließende Trocknung der Perlen unter Vakuum bei 150 °C für zwei Tage eine Bildanalyse mit Hilfe eines Camsizer durchgeführt werden.

Die Anmeldung betrifft auch die Verwendung der Perlen zur Herstellung von Polyarylenetherprodukten. Unter Polyarylenetherprodukten werden Produkte verstanden, die einer Extraktion, Trocknung und/oder einem formgebenden Verfahren unterzogen wurden. So betrifft die Anmeldung auch Produkte aus dem Verfahren, die nach Aufarbeitung wie Extraktion und Trocknung in eine verkaufsfähige Form gebracht werden wie Pellets, Pulver, Granulate, Chips, Körner oder Fäden.

Beispiele

Beispiele 1 bis 36: Variation Fällbadtemperatur und Fällbad Zusammensetzung in Wasser / Sulfolan

Die Versuche 1 bis 36 wurden nacheinander mit jeweils einer exemplarischen Polyarylenetherlösung durchgeführt, wobei das Ausfallverhalten optimiert wurde. Lösung 1: Eine Lösung umfassend einen Polyarylenether mit Elementen der Struktur I (Formel II) wurde in Sulfolan gelöst und die jeweilige Konzentration eingestellt (siehe Tabellen, Polyarylenetherlösung). Der verwendete Polyarylenether mit Elementen der Struktur I wies eine Viskositätszahl von 56 ml/g auf. Die Viskositätszahlbestimmung wurde nach ISO1628 aus einer 0,01g/ml Lösung in Phenol/1,2-Dichlorbenzol (1:1) bei 25°C durchgeführt.

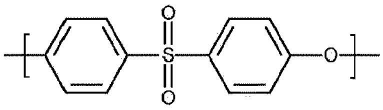

Formel II

Die Lösung 1, deren Konzentration eingestellt wurde, wurde aus einem Vorlagebehälter unter einer konstanten Förderarte von 1000 g/ h durch eine Kapillare zur Vereinzelung unter Bildung von Tropfen gefahren. Die Versuche wurden mit einer Kapillare als Düse durchgeführt. Der Kapillardurchmesser und die Fallstrecke von Austritt aus der Kapillare und Fällbadoberfläche sind in den nachstehenden Tabellen angegeben.

Nach der Vereinzelung fiel der Tropfen der jeweiligen Polymerlösung in ein Fällbad. Die Zusammensetzung des Fällbades (Komponente 1.1 Sulfolan, Komponente 1.2 DMSO; Komponente 2.1 Wasser) wurde wie in den Tabellen angegeben variiert. Die Temperatur des Fällbades wurde während eines Versuchs konstant gehalten. Die bei dem Vorgang entstehenden Perlen wurden mit Hilfe eines Siebs abgetrennt und weitergehend untersucht.

Der Versuch wurde bei verschiedenen Fällbad Temperaturen durchgeführt.

Der Sulfolan-Gehalt im Fällbad wurde mit Hilfe eines Refraktometers bei 25 °C kontrolliert. Das eingesetzte Messgerät war ein Abbe-Refraktometer der Firma Leo Kübler GmbH (Model: Atago). Ein Tropfen des Wasser / Sulfolan Gemisches wurde zur Messung des Brechungsindexes aus dem Fällmedium entnommen. Anhand einer Eichkurve Sulfolan/Wasser-Zusammensetzung vs. Brechungsindex konnte die Fällbadzusammensetzung kontrolliert beziehungsweise gemessen werden.

Lösungsmittel Sulfolan, Lösung 1

Variation des Sulfolan-Gehaltes des Fällbades bei 20°C Fällbadtemperatur:

| Bsp. | Polyarylenetherlösung | | | Düsendurchmesser [mm] | Fällhöhe [cm] | Fällbad | | Ausfallverhalten |
|---|---|---|---|---|---|---|---|---|
| | Lösungsnummer | Konz. [Gew. %] | T [°C] | | | T [°C] | Sulfolan Gehalt [Gew.%] | |
| 1 | 1 | 18 | 76 | 1 | 70 | 20 | 20 | Einzelne Perlen |
| 2 | 1 | 18 | 76 | 1 | 70 | 20 | 40 | Einzelne Perlen |
| 3 | 1 | 18 | 76 | 1 | 70 | 20 | 60 | Einzelne Perlen |
| 4* | 1 | 18 | 76 | 1 | 70 | 20 | 80 | Einzelne Perlen |
| 5* | 1 | 18 | 76 | 1 | 70 | 20 | 85 | Einzelne Perlen |
| 6* | 1 | 18 | 76 | 1 | 70 | 20 | 90 | Perlen, die im Fällbad agglomerieren |
| *zum Vergleich | | | | | | | | |

Fotos von den Proben der Beispiele 1 und 6 wurden zur Veranschaulichung aufgenommen und sind unten angegeben.

| Beispiel 1 | Beispiel 6 |
| --- | --- |
| 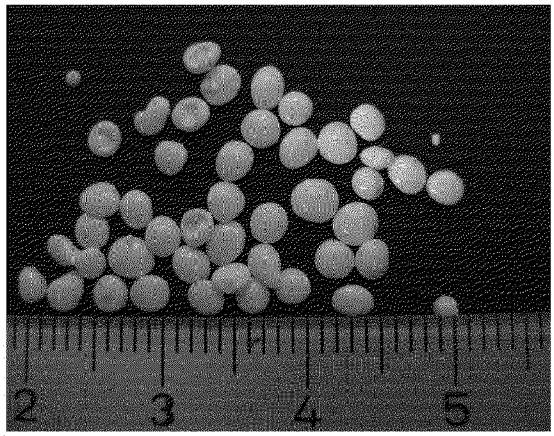 | 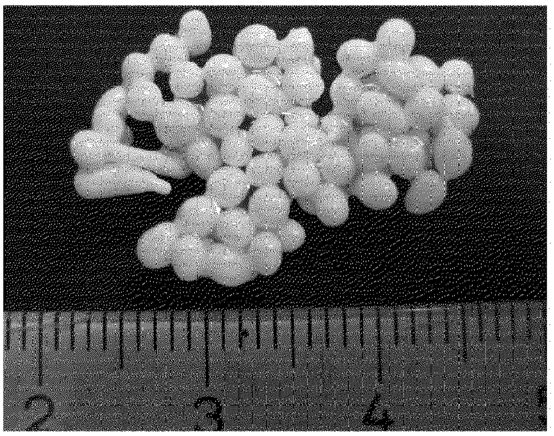 |

Variation des Sulfolan-Gehaltes des Fällbades bei 30°C Fällbadtemperatur:

| Bsp. | Polyarylenetherlösung | | | Düsendurchmesse r[mm] | Fallhöhe [cm] | Fällbad | | Ausfallverhalten |
|---|---|---|---|---|---|---|---|---|
| | Lösungsnummer | Konz. [Gew.%] | T [°C] | | | T [°C] | Sulfolan Gehalt [Gew.%] | |
| 7 | 1 | 18 | 76 | 1 | 70 | 30 | 20 | Einzelne Perlen |
| 8 | 1 | 18 | 76 | 1 | 70 | 30 | 40 | Einzelne Perlen |
| 9 | 1 | 18 | 76 | 1 | 70 | 30 | 60 | Einzelne Perlen |
| 10 | 1 | 18 | 76 | 1 | 70 | 30 | 70 | Einzelne Perlen |
| 11* | 1 | 18 | 76 | 1 | 70 | 30 | 75 | Einzelne Perlen |
| 12* | 1 | 18 | 76 | 1 | 70 | 30 | 81 | Perlen, die im Fällbad agglomerieren |
| *zum VergleichVariation des Sulfolan-Gehaltes des Fällbades bei 40°C Fällbadtemperatur: | | | | | | | | |

| Bsp. | Polyarylenetherlösung | | | Düsendurchmesser [mm] | Fällhöhe [cm] | Fällbad | | Ausfallverhalten |
|---|---|---|---|---|---|---|---|---|
| | Lösungs nummer | Konz. [Gew. %] | T[°C] | | | T [°C] | Sulfolan Gehalt [Gew.%] | |
| 13 | 1 | 18 | 76 | 1 | 70 | 40 | 20 | Einzelne Perlen |
| 14 | 1 | 18 | 76 | 1 | 70 | 40 | 40 | Einzelne Perlen |
| 15 | 1 | 18 | 76 | 1 | 70 | 40 | 60 | Einzelne Perlen |
| 16 | 1 | 18 | 76 | 1 | 70 | 40 | 70 | Einzelne Perlen |
| 17* | 1 | 18 | 76 | 1 | 70 | 40 | 75 | Perlen, die im Fällbad agglomerieren |
| *zum Vergleich | | | | | | | | |

Variation des Sulfolan-Gehaltes des Fällbades bei 50°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | sungsnummer | Konz. [Gew.%] | T [°C] | | | T [°C] | Sulfolan Gehalt [Gew.%] | |
| 18 | 1 | 18 | 76 | 1 | 70 | 50 | 20 | Einzelne Perlen |
| 19 | 1 | 18 | 76 | 1 | 70 | 50 | 40 | Einzelne Perlen |
| 20 | 1 | 18 | 76 | 1 | 70 | 50 | 60 | Einzelne Perlen |
| 21 | 1 | 18 | 76 | 1 | 70 | 50 | 65 | Einzelne Perlen |
| 22* | 1 | 18 | 76 | 1 | 70 | 50 | 70 | Perlen, die im Fällbad agglomerieren |
| *zum Vergleich | | | | | | | | |

Variation des Sulfolan-Gehaltes des Fällbades bei 60°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | Lösungsnummer | Konz. [Gew.%] | T [°C] | | | T [°C] | Sulfolan Gehalt [Gew.%] | |
| 23 | 1 | 18 | 76 | 1 | 70 | 60 | 20 | Einzelne Perlen |
| 24 | 1 | 18 | 76 | 1 | 70 | 60 | 40 | Einzelne Perlen |
| 25 | 1 | 18 | 76 | 1 | 70 | 60 | 50 | Einzelne Perlen |
| 26 | 1 | 18 | 76 | 1 | 70 | 60 | 60 | Einzelne Perlen |
| 27* | 1 | 18 | 76 | 1 | 70 | 60 | 65 | Perlen, die im Fällbad agglomerieren |
| *zum Vergleich | | | | | | | | |

Variation des Sulfolan-Gehaltes des Fällbades bei 70°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | sungsnummer | Konz. [Gew.%] | T [°C] | | | T [°C] | Sulfolan Gehalt [Gew.%] | |
| 28 | 1 | 18 | 76 | 1 | 70 | 70 | 20 | Einzelne Perlen |
| 29 | 1 | 18 | 76 | 1 | 70 | 70 | 40 | Einzelne Perlen |
| 30 | 1 | 18 | 76 | 1 | 70 | 70 | 50 | Einzelne Perlen |
| 31 | 1 | 18 | 76 | 1 | 70 | 70 | 55 | Einzelne Perlen |
| 32* | 1 | 18 | 76 | 1 | 70 | 70 | 59 | Perlen, die im Fällbad agglomerieren |
| *zum Vergleich | | | | | | | | |

Variation des Sulfolan-Gehaltes des Fällbades bei 80°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | Lösungsnummer | Konz. [Gew.%] | T [°C] | | | T [°C] | Sulfolan Gehalt [Gew.%] | |
| 33 | 1 | 18 | 76 | 1 | 70 | 80 | 20 | Einzelne Perlen |
| 34 | 1 | 18 | 76 | 1 | 70 | 80 | 40 | Einzelne Perlen |
| 35 | 1 | 18 | 76 | 1 | 70 | 80 | 50 | Einzelne Perlen |
| 36* | 1 | 18 | 76 | 1 | 70 | 80 | 53 | Perlen, die im Fällbad agglomerieren |

*zum Vergleich

Beispiele 37 bis 72: Variation Fällbadtemperatur und Fällbadzusammensetzung in Wasser / DMSO

Die Versuche 37 bis 72 wurden nacheinander mit einer exemplarischen Polyarylenetherlösung durchgeführt, wobei das Ausfallverhalten optimiert wurde.

Lösung 2: Eine Lösung umfassend einen Polyarylenether mit Elementen der Struktur II (Formel III) wurde in DMSO gelöst und die jeweilige Konzentration eingestellt (siehe Tabellen, Polyarylenetherlösung). Der verwendete Polyarylenether mit Elementen der Struktur II wies eine Viskositätszahl von 63 ml/g auf. Die Viskositätszahlbestimmung wurde nach ISO1628 aus einer 0,01g/ml Lösung in Phenol/1,2-Dichlorbenzol (1:1) bei 25°C durchgeführt.

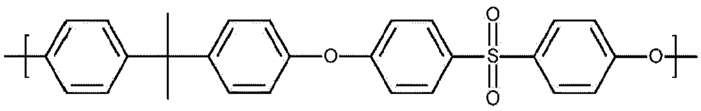

Formel

III

Die Lösung 2, deren Konzentration eingestellt wurde, wurde aus einem Vorlagebehälter unter einer konstanten Förderarte von 1000 g/ h durch eine Kapillare zur Vereinzelung unter Bildung von Tropfen gefahren. Die Versuche wurden mit einer Kapillare als Düse durchgeführt. Der Kapillardurchmesser und die Fallstrecke von Austritt aus der Kapillare und Fällbadoberfläche sind in den nachstehenden Tabellen angegeben.

Nach der Vereinzelung fiel der Tropfen der jeweiligen Polymerlösung in ein Fällbad. Die Zusammensetzung des Fällbades wurde wie in den Tabellen angegeben variiert. Die Temperatur des Fällbades wurde während eines Versuchs konstant gehalten. Die bei dem Vorgang entstehenden Perlen wurden mit Hilfe eines Siebs abgetrennt und weitergehend untersucht.

Der Versuch wurde bei verschiedenen Fällbadtemperaturen durchgeführt.

Der DMSO-Gehalt im Fällbad wurde mit Hilfe eines Refraktometers bei 25 °C kontrolliert. Das eingesetzte Messgerät war ein Abbe-Refraktometer der Firma Leo Kübler GmbH (Model: Atago). Ein Tropfen des Wasser / DMSO Gemisches wurde zur Messung des Brechungsindexes aus dem Fällmedium entnommen. Anhand einer Eichkurve DMSO / Wasser-Zusammensetzung vs. Brechungsindex konnte die Fällbad Zusammensetzung kontrolliert beziehungsweise gemessen werden.

Lösungsmittel DMSO, Lösung 2

Variation des DMSO-Gehaltes des Fällbades bei 20°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | Lösungsnummer | Konz. [Gew.%] | T [°C] | | | T [°C] | DMSO Gehalt [Gew.%] | |
| 37 | 2 | 18 | 75 | 1 | 70 | 20 | 20 | Einzelne Perlen |
| 38 | 2 | 18 | 75 | 1 | 70 | 20 | 40 | Einzelne Perlen |
| 39 | 2 | 18 | 75 | 1 | 70 | 20 | 60 | Einzelne Perlen |
| 40* | 2 | 18 | 75 | 1 | 70 | 20 | 80 | Einzelne Perlen |
| 41* | 2 | 18 | 75 | 1 | 70 | 20 | 85 | Einzelne Perlen |
| 42* | 2 | 18 | 75 | 1 | 70 | 20 | 92 | Perlen, die im Fällbad agglomerieren |
| *zum Vergleich | | | | | | | | |

Fotos von den Proben der Beispiele 37 und 42 wurden zur Veranschaulichung aufgenommen und sind unten angegeben.

| Beispiel 37 | Beispiel 42 |
|---|---|
| 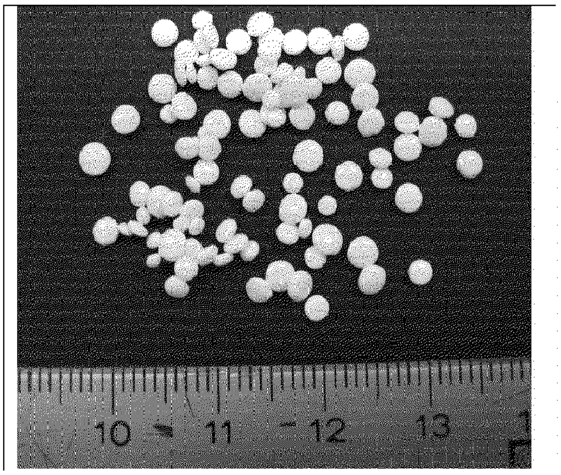 | 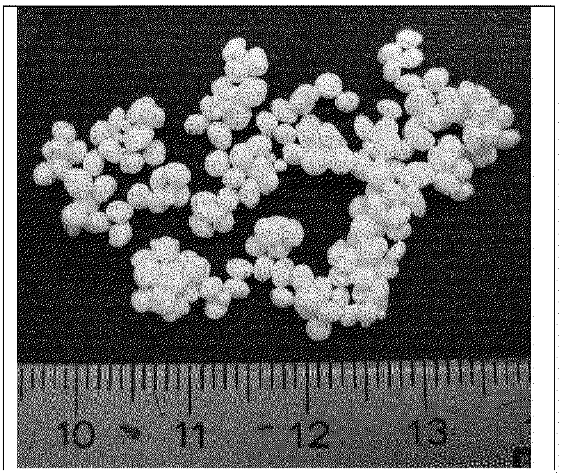 |

Variation des DMSO-Gehaltes des Fällbades bei 30°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | sungsnummer | Konz. [Gew.%] | T [°C] | | | T [°C] | DMSO Gehalt [Gew.%] | |
| 43 | 2 | 18 | 75 | 1 | 70 | 30 | 20 | Einzelne Perlen |
| 44 | 2 | 18 | 75 | 1 | 70 | 30 | 40 | Einzelne Perlen |
| 45 | 2 | 18 | 75 | 1 | 70 | 30 | 60 | Einzelne Perlen |
| 46 | 2 | 18 | 75 | 1 | 70 | 30 | 80 | Einzelne Perlen |
| 47* | 2 | 18 | 75 | 1 | 70 | 30 | 85 | Perlen, die im Fällbad agglomerieren |

*zum Vergleich

Variation des DMSO-Gehaltes des Fällbades bei 40°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | Lösungsnummer | Konz. [Gew.%] | T [°C] | | | T [°C] | DMSO Gehalt [Gew.%] | |
| 48 | 2 | 18 | 75 | 1 | 70 | 40 | 20 | Einzelne Perlen |
| 49 | 2 | 18 | 75 | 1 | 70 | 40 | 40 | Einzelne Perlen |
| 50 | 2 | 18 | 75 | 1 | 70 | 40 | 60 | Einzelne Perlen |
| 51 | 2 | 18 | 75 | 1 | 70 | 40 | 70 | Einzelne Perlen |
| 52* | 2 | 18 | 75 | 1 | 70 | 40 | 74 | Einzelne Perlen |
| 53* | 2 | 18 | 75 | 1 | 70 | 40 | 78 | Perlen, die im Fällbad agglomerieren |
| *zum Vergleich | | | | | | | | |

Variation des DMSO-Gehaltes des Fällbades bei 50°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | Lösungsnummer | Konz. [Gew.%] | T [°C] | | | T [°C] | DMSO Gehalt [Gew.%] | |
| 54 | 2 | 18 | 75 | 1 | 70 | 50 | 20 | Einzelne Perlen |
| 55 | 2 | 18 | 75 | 1 | 70 | 50 | 40 | Einzelne Perlen |
| 56 | 2 | 18 | 75 | 1 | 70 | 50 | 60 | Einzelne Perlen |
| 57 | 2 | 18 | 75 | 1 | 70 | 50 | 68 | Einzelne Perlen |
| 58* | 2 | 18 | 75 | 1 | 70 | 50 | 73 | Perlen, die im Fällbad agglomerieren |
| *zum Vergleich | | | | | | | | |

Variation des DMSO-Gehaltes des Fällbades bei 60°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | sungsnummer | Konz. [Gew.%] | T [°C] | | | T [°C] | DMSO Gehalt [Gew.%] | |
| 59 | 2 | 18 | 75 | 1 | 70 | 60 | 20 | Einzelne Perlen |
| 60 | 2 | 18 | 75 | 1 | 70 | 60 | 40 | Einzelne Perlen |
| 61 | 2 | 18 | 75 | 1 | 70 | 60 | 60 | Einzelne Perlen |
| 62 | 2 | 18 | 75 | 1 | 70 | 60 | 62 | Einzelne Perlen |
| 63* | 2 | 18 | 75 | 1 | 70 | 60 | 68 | Perlen, die im Fällbad agglomerieren |
| *zum Vergleich | | | | | | | | |

Variation des DMSO-Gehaltes des Fällbades bei 70°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | sungsnummer | Konz. [Gew.%] | T [°C] | | | T [°C] | DMSO Gehalt [Gew.%] | |
| 64 | 2 | 18 | 75 | 1 | 70 | 70 | 20 | Einzelne Perlen |
| 65 | 2 | 18 | 75 | 1 | 70 | 70 | 40 | Einzelne Perlen |
| 66 | 2 | 18 | 75 | 1 | 70 | 70 | 50 | Einzelne Perlen |
| 67 | 2 | 18 | 75 | 1 | 70 | 70 | 55 | Einzelne Perlen |
| 68* | 2 | 18 | 75 | 1 | 70 | 70 | 61 | Perlen, die im Fällbad agglomerieren |
| *zum Vergleich | | | | | | | | |

Variation des DMSO-Gehaltes des Fällbades bei 80°C Fällbadtemperatur:

| Bsp. | Polyarylenetherlösung | | | Düsendurchmess er [mm] | Fällhöhe [cm] | Fällbad | | Ausfallverhalten |
|---|---|---|---|---|---|---|---|---|
| | Lösungsnummer | Konz. [Gew.%] | T [°C] | | | T [°C] | DMSO Gehalt [Gew.%] | |
| 69 | 2 | 18 | 75 | 1 | 70 | 80 | 20 | Einzelne Perlen |
| 70 | 2 | 18 | 75 | 1 | 70 | 80 | 40 | Einzelne Perlen |
| 71 | 2 | 18 | 75 | 1 | 70 | 80 | 50 | Einzelne Perlen |
| 72* | 2 | 18 | 75 | 1 | 70 | 80 | 55 | Perlen, die im Fällbad agglomerieren |
| *zum Vergleich | | | | | | | | |

Die Beispiele 73 und 74 zeigen den Einfluss der Sulfolankonzentration im Fällbad auf die Bildung von Feinanteil. Unter "Feinanteil" werden hierbei Polyarylenether-Perlen verstanden, die eine Partikelgröße von ≤ 1000 μm aufweisen.
Hierzu wurde eine Lösung 3 von Polyarylenether in Sulfolan hergestellt. Als Polyarylenether wurde Ultrason® E2020 der BASF SE eingesetzt. Die Konzentration des Polyarylenethers betrug 16,0 Gew.-%.
Der Polyarylenether wurde mittels Vertropfung gefällt und anschließend extrahiert. Für die Vertropfung wurde die Lösung 3 in den Vorlagebehälter eingefüllt und auf die gewünschte Temperatur temperiert. Mittels Zahnradpumpe wurde die Lösung 3 über eine Kapillare vertropft. Die Fällung erfolgte in einem Fällbad mit Überlauf zu einem Schüttelsieb, das die Perlen abtrennte. Die Fällbadlösung wurde in einem Puffergefäß aufgefangen und anschließend wieder dem Fällbad zugeführt.
Die Konzentration von Sulfolan im Fällbad wurde mittels Brechzahl überwacht und durch Zugabe von VE-Wasser ausgeglichen. Nach Ende der Vertropfung wurden die Perlen/Linsen abgesaugt, mit VE-Wasser gewaschen und anschließend extrahiert.
Die Bedingungen während der Vertropfung sind in der nachfolgenden Tabelle angegeben.

| Vers. | Lösungsmittel | Konz. in Lösung 3 [Gew.-%] | Konz. LM im Fällbad [%] | Temp. Fällbad [°C] | Temp. Lösung 3 beim Vertr. [°C] | Fallhöhe [cm] |
|---|---|---|---|---|---|---|
| 73 | Sulfolan | 16,0 | < 1 | 40 | 80 | 60 |
| 74 | Sulfolan | 16,0 | 40 | 40 | 80 | 60 |

Die Bedingungen bei der Extraktion mit Wasser waren wie folgt:

| | |
|---|---|
| Temp. in der Extraktion: | 95 °C |
| Durchsatz Extraktionsmittel: | 2000 ml Wasser / h |
| Temp. Extraktionsmittel: | 90-95 °C |
| Dauer Extraktion: | 24 h |

Die Partikelgrößenverteilung wurde wie folgt bestimmt:
Die extrahierten, feuchten Perlen/Linsen wurden im Trockenschrank bei 60 °C getrocknet und anschließend die Verteilung mittels Handsiebung im Siebturm ermittelt. Die Ergebnisse sind in der nachfolgenden Tabelle angegeben.

| Partikelgröße [μm] | 73 | 74 |
|---|---|---|
| 3150 | 99,16 | 100,0 |
| 2800 | 97,49 | 99,89 |
| 2500 | 92,48 | 99,21 |
| 2000 | 27,69 | 30,51 |
| 1600 | 8,88 | 2,94 |
| 1250 | 5,33 | 0,45 |
| 1000 | 4,28 | 0,23 |
| 650 | 3,87 | 0,45 |
| Summe ≤ 1000 = **Feinanteil** | 8,15 | 0,68 |
| | | |

Die Beispiele 73 und 74 zeigen, dass im erfindungsgemäßen Konzentrationsbereich an aprotischem Lösungsmittel im Fällbad Polyarylenether-Perlen erhalten werden, die einen deutlich geringeren Feinanteil aufweisen.

## Patentansprüche

**1.** Verfahren zur Herstellung von Polyarylenether-Perlen aus einer Polyarylenetherlösung umfassend die Schritte

i) Vereinzelung der Polyarylenetherlösung zu Tropfen,
ii) Überführen der Tropfen in ein Fällbad unter Ausbildung von Polyarylenether-Perlen in dem Fällbad, wobei das Fällbad

(A) mindestens ein aprotisches Lösungsmittel (Komponente (1)) und mindestens ein protisches Lösungsmittel (Komponente (2)) enthält,
(B) eine Temperatur von 0°C bis $T_c$ aufweist, wobei die kritische Temperatur $T_c$ in [°C] sich mit der Zahlenwertgleichung $T_c = (99 - c) / 0{,}61$ bestimmen lässt, in der c die Konzentration der Komponente (1) im Fällbad in [Gew.-%] ist und
(C) die Komponente (1) in Konzentrationen von 12 bis 70 Gew.-% aufweist, wobei

die Gew.-% jeweils bezogen sind auf die Summe der Gew.-% der Komponente (1) und der Komponente (2) im Fällbad, und wobei das Fällbad als Komponente (2) Wasser und/oder Alkohol enthält, wobei die Polyarylenetherlösung eine Konzentration von 5 bis 50 Gew.-% Polyarylenether im aprotischen Lösungsmittel aufweist, wobei die Gew.-% bezogen sind auf die Summe der Gew.-% des Polyarylenethers und des aprotischen Lösungsmittels, wobei die Polyarylenetherlösung bei der Vereinzelung eine Temperatur von 15 bis 250 °C aufweist, wobei das aprotische Lösungsmittel ausgewählt ist aus der Gruppe bestehend aus Dimethylsulfoxid, Dimethylformamid, Sulfolan, Diphenylsulfon, 1,2-Dichlorbenzol, Hexamethylphosphorsäuretriamid und deren Mischungen.

**2.** Verfahren nach Anspruch 1, wobei das Fällbad bewegt ist.

**3.** Verfahren nach mindestens einem der Ansprüche 1 oder 2, wobei die Polyarylenetherlösung bei der Vereinzelung eine Temperatur von 20 bis 120 °C aufweist.

**4.** Verfahren nach mindestens einem der Ansprüche 1 bis 3, wobei die Polyarylenetherlösung nach Austritt aus der Vereinzelungsvorrichtung eine Fallstrecke von der Austrittsstelle bis zur Fällbadoberfläche von 0,10 m bis 1,20 m zurücklegt.

**5.** Verfahren nach mindestens einem der Ansprüche 1 bis 4, wobei als Vereinzelungsvorrichtung eine Kapillare und/oder Lochplatte verwendet wird.

**6.** Verfahren nach Anspruch 5, wobei die Kapillare und/oder Lochplatte einen Durchmesser von 0,1 bis 5,0 mm aufweist.

**7.** Verfahren nach mindestens einem der Ansprüche 1 bis 6, wobei die Polyarylenetherlösung und das Fällbad das gleiche aprotische Lösungsmittel enthalten.

**8.** Verfahren nach mindestens einem der Ansprüche 1 bis 7, wobei das Fällbad 12 bis 50 Gew.-% Komponente (1) enthält, wobei die Gew.-% jeweils bezogen sind auf die Summe der Gew.-% der Komponente (1) und der Komponente (2) im Fällbad.

**9.** Polyarylenether-Perlen aus dem Verfahren nach einem der Ansprüche 1 bis 8, wobei als Vereinzelungsvorrichtung eine Kapillare und/oder Lochplatte verwendet wird und wobei die Kapillare und/oder Lochplatte einen Durchmesser von 0,1 bis 5,0 mm aufweist.

**10.** Verwendung der Polyarylenether-Perlen nach Anspruch 9 zur Herstellung von Polyarylenetherprodukten.

## Claims

**1.** A process for producing polyarylene ether beads from a polyarylene ether solution, comprising the steps of

i) dividing the polyarylene ether solution into droplets,
ii) transferring the droplets into a precipitation bath to form polyarylene ether beads in the precipitation bath which

A) comprises at least one aprotic solvent (component (1)) and at least one protic solvent (component (2)),
B) has a temperature of 0°C to $T_c$, where the critical temperature $T_c$ in [°C] can be determined by the numerical equation $T_c = (99 - c) / 0.61$ in which c is the concentration of component (1) in the precipitation bath in [% by weight] and

C) has component (1) in concentrations of 12% by weight to 70% by weight, where

the percentages by weight are each based on the sum of the percentages by weight of component (1) and of component (2) in the precipitation bath, and wherein the precipitation bath comprises water and/or alcohol as component (2), wherein the polyarylene ether solution has a concentration of 5 to 50% by weight of polyarylene ether in the aprotic solvent, where the percentages by weight are based on the sum of the percentages by weight of the polyarylene ether and the aprotic solvent, wherein the polyarylene ether solution on division has a temperature of 15 to 250°C, wherein the aprotic solvent is selected from the group consisting of dimethyl sulfoxide, dimethylformamide, sulfolane, diphenyl sulfone, 1,2-dichlorobenzene, hexamethylphosphoramide and mixtures thereof.

**2.** The process according to claim 1, wherein the precipitation bath is agitated.

**3.** The process according to at least one of claims 1 and 2, wherein the polyarylene ether solution on division has a temperature of 20 to 120°C.

**4.** The process according to at least one of claims 1 to 3, wherein the polyarylene ether solution after leaving the division apparatus covers a fall distance from the exit point to the precipitation bath surface of 0.10 m to 1.20 m.

**5.** The process according to at least one of claims 1 to 4, wherein the division apparatus used comprises a capillary and/or die plate.

**6.** The process according to claim 5, wherein the capillary and/or die plate has a diameter of 0.1 to 5.0 mm.

**7.** The process according to at least one of claims 1 to 6, wherein the polyarylene ether solution and the precipitation bath comprise the same aprotic solvent.

**8.** The process according to at least one of claims 1 to 7, wherein the precipitation bath comprises 12 to 50% by weight of component (1), where the percentages by weight are each based on the sum of the percentages by weight of component (1) and component (2) in the precipitation bath.

**9.** Polyarylene beads from the process according to any of claims 1 to 8, wherein the division apparatus used comprises a capillary and/or die plate, and wherein the capillary and/or die plate has a diameter of 0.1 to 5.0 mm.

**10.** The use of the polyarylene beads according to claim 9 for production of polyarylene ether products.

**Revendications**

**1.** Procédé pour la préparation de perles de polyarylène-éther à partir d'une solution de polyarylène-éther comprenant les étapes de

i) individualisation de la solution de polyarylène-éther en gouttes,
ii) transfert des gouttes dans un bain de précipitation avec formation de perles de polyarylène-éther dans le bain de précipitation, le bain de précipitation

(A) contenant au moins un solvant aprotique (composant (1)) et au moins un solvant protique (composant (2)),
(B) présentant une température de 0 °C à $T_c$, la température critique $T_c$ en [°C] se laissant déterminer avec l'équation de valeurs numériques $T_c = (99 - c)/0,61$, dans laquelle c est la concentration du composant (1) dans le bain de précipitation en [% en poids] et
(C) présentant le composant (1) en des concentrations de 12 à 70 % en poids,

les % en poids se rapportant à chaque fois à la somme des % en poids du composant (1) et du composant (2) dans le bain de précipitation, et le bain de précipitation contenant de l'eau et/ou un alcool en tant que composant (2), la solution de polyarylène-éther présentant une concentration de 5 à 50 % en poids de polyarylène-éther dans le solvant aprotique, les % en poids se rapportant à la somme des % en poids du polyarylène-éther et du solvant aprotique, la solution de polyarylène-éther présentant une température de 15 à 250 °C lors de l'individualisation, le solvant aprotique étant choisi dans le groupe constitué par le diméthylsulfoxyde, le diméthylformamide, le sulfolane, la diphénylsulfone, le 1,2-dichlorobenzène, le triamide hexaméthylphosphorique et leurs mélanges.

**2.** Procédé selon la revendication 1, le bain de précipitation étant agité.

**3.** Procédé selon au moins l'une des revendications 1 et 2, la solution de polyarylène-éther présentant une température de 20 à 120 °C lors de l'individualisation.

**4.** Procédé selon au moins l'une des revendications 1 à 3, la solution de polyarylène-éther parcourant, après la sortie du dispositif d'individualisation, un trajet de chute de 0,10 m à 1,20 m de l'emplacement de sortie jusqu'à la surface du bain de précipitation.

**5.** Procédé selon au moins l'une des revendications 1 à 4, un capillaire et/ou une plaque perforée étant utilisé(e) en tant que dispositif d'individualisation.

**6.** Procédé selon la revendication 5, le capillaire et/ou la plaque perforée présentant un diamètre de 0,1 à 5,0 mm.

**7.** Procédé selon au moins l'une des revendications 1 à 6, la solution de polyarylène-éther et le bain de précipitation contenant le même solvant aprotique.

**8.** Procédé selon au moins l'une des revendications 1 à 7, le bain de précipitation contenant 12 à 50 % en poids de composant (1), les % en poids se rapportant à chaque fois à la somme des % en poids du composant (1) et du composant (2) dans le bain de précipitation.

**9.** Perles de polyarylène-éther du procédé selon l'une quelconque des revendications 1 à 8, un capillaire et/ou une plaque perforée étant utilisé(e) en tant que dispositif d'individualisation, et le capillaire et/ou la plaque perforée présentant un diamètre de 0,1 à 5,0 mm.

**10.** Utilisation des perles de polyarylène-éther selon la revendication 9 pour la préparation de produits de polyarylène-éther.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3644464
- EP 2305740 A


### In der Beschreibung aufgeführte Nicht-Patentliteratur


- Polysulfones. **HERMAN F. MARK.** Encyclopedia of Polymer Science and Technology. 2003, vol. 4, 2-8
- Aromatic Polyethers. **HANS R. KRICHELDORF.** Handbook of Polymer Synthesis. 2005, 427-443